# EUROPEAN PATENT SPECIFICATION

(11) **EP 1 521 001 B1**
(45) Date of publication and mention of the grant of the patent: **02.05.2018**
(21) Application number: 04255993.0
(22) Date of filing: 29.09.2004
(51) Int. Cl.: F16D 69/02

(54) **Friction material**
Reibungsmaterial
Matériau de frottement

(30) Priority: 03.10.2003 US 678599; 11.08.2004 US 916328
(43) Date of publication of application: 06.04.2005
(73) Proprietor: BorgWarner, Inc., Auburn Hills, MI 48326-2872 (US)
(72) Inventor: Lam, Robert C., Rochester Michigan 48306 (US); Dong, Feng, Rochester Michigan 48306 (US); Chen, Yih-Fang, Lisle Illinois 60532 (US)
(74) Representative: Bennett, Adrian Robert J.

(56) References cited:
- EP-A- 0 766 019
- EP-A- 1 203 897
- EP-A- 1 391 629
- EP-A- 1 396 655
- EP-A- 1 517 062

## Description

The present invention relates to a friction material comprising a high fiber content primary layer and a secondary layer comprising friction modifying particles. The friction material of the present invention has improved anti-shudder characteristics, high coefficients of friction, and improved strength, porosity, wear resistance and noise resistance.

### BACKGROUND ART

New and advanced transmission systems and braking systems are being developed by the automotive industry. These new systems often involve high-energy requirements. Therefore, the friction materials technology must be also developed to meet the increasing energy requirements of these advanced systems.

In particular, a new high performance, durable friction material is needed. The new friction material must be able to withstand high speeds wherein surface speeds are up to about 65m/seconds. Also, the friction material must be able to withstand high facing lining pressures up to about 10.34 Mpa (1500 psi). It is also important that the friction material be useful under limited lubrication conditions.

The friction material must be durable and have high heat resistance in order to be useful in the advanced transmission and braking systems. Not only must the friction material remain stable at high temperatures, it must also be able to rapidly dissipate the high heat that is being generated during operating conditions.

The high speeds generated during engagement and disengagement of the new transmission and braking systems mean that a friction material must be able to maintain a relatively constant friction throughout the engagement. It is important that the frictional engagement be relatively constant over a wide range of speeds and temperatures in order to minimize "shuddering" of materials during braking or the transmission system during power shift from one gear to another. It is also important that the friction material have a desired torque curve shape so that during frictional engagement the friction material is noise or "squawk" free.

In particular, transmission and torque-on-demand systems incorporate slipping clutches mainly for the fuel efficiency and driving comfort. The role of the slip clutch within these systems varies from vehicle launching devices, such as wet start clutches, to that of a torque converter clutches. According to the operating conditions, the slip clutch can be differentiated into three principle classes: (1) Low Pressure and High Slip Speed Clutch, such as wet start clutch; (2) High Pressure and Low Slip Speed Clutch, such as Converter Clutch; and (3) Extreme Low Pressure and Low Slip Speed Clutch, such as neutral to idle clutch.

The principal performance concerns for all applications of the slip clutch are the prevention of shudder and the energy management of the friction interface. The occurrence of shudder can be attributed to many factors including the friction characteristics of the friction material, the mating surface's hardness and roughness, oil film retention, lubricant chemistry and interactions, clutch operating conditions, driveline assembly and hardware alignment, and driveline contamination. The friction interface energy management is primarily concerned with controlling interface temperature and is affected by the pump capacity, oil flow path and control strategy. The friction material surface design also contributes to the efficiency of interface energy management.

Previously, asbestos fibers were included in the friction material for temperature stability. Due to health and environmental problems, asbestos is no longer being used. More recent friction materials have attempted to overcome the absence of the asbestos in the friction material by modifying impregnating paper or fiber materials with phenolic or phenolic-modified resins. These friction materials, however, do not rapidly dissipate the high heat generated, and do not have the necessary heat resistance and satisfactory high coefficient of friction performance now needed for use in the high speed systems currently being developed.

The present invention is an improvement over the Winckler U.S. Patent No. 4,700,823 which describes a friction material comprising a mesh of cloth substrate formed of carbon fibers and a coating of carbon deposited on the fibbers by chemical vapor deposition.

The present invention is also an improvement over the Winckler U.S. Patent No. 5,662,993 which describes a friction material comprising fibers formed into strands that are woven or braided together into a fabric. The strands have a binder wicked along each of the fibers such that gaps are left between fibers.

The present invention is also an improvement over the Gibson et al. U.S. Patent No. 5,952,249 which describes an amorphous carbon-coated carbon fabric where the amorphous carbon fills gaps between individual fibers of the yarn comprising the fabric.

Various other types of friction materials are made of a paper material. For example, the Kersey, U.S. Patent No. 5,585,166 describes a two layer friction material having a porous substrate and a porous friction layer.

The present invention is an improvement over the Seitz U.S. Patent No. 5,083,650 reference which involves a multi-step impregnating and curing process; i.e., a paper impregnated with a coating composition, carbon particles are placed on the paper, the coating composition in the paper is partially cured, a second coating composition is applied to the partially cured paper, and finally, both coating compositions are cured.

In other friction materials, metallic fibers combined with carbon materials were included in the friction material for wear resistance. For example, Fujimaki et al. U.S. Patent No. 4,451,590 describes a friction material having metallic fibers, filler, carbon particles, carbon fibers and phenolic resin. However, the metallic based friction materials do not have sufficient porosity and compressibility to be capable of high fluid permeation capacity during use. Also, the metallic based friction materials are not sufficiently resilient or elastic, yet resistant to compression set to be capable of withstanding high facing lining pressures of up to about 10.34MPa (1500 psi) (approximately 105 kg/cm²). The metallic based friction material also is not capable of withstanding high surface speeds of up to about 65 m/second which are generated during engagement and disengagement of the new transmission and braking systems.

Various other friction materials currently in use are include many types of "paper based" friction materials. These "paper based" friction materials generally include a fibrous base material that is typically made of random, nonwoven fibrous materials along with at least one type of suitable filler material. For example, various useful friction materials have been developed that are co-owned by the assignee herein, BorgWarner Inc.

The present invention is also an improvement over earlier co-owned patents by the assignee herein, BorgWarner Inc., for friction materials. In particular, U.S. Patent No. 5,998,307 relates to a friction material having a base impregnated with a curable resin where a porous primarily layer comprises at least one fibrous material and a secondary layer of carbon particles covering at least about 3 to about 90% of the surface of the primary layer. The U.S. Patent No. 5,858,883 relates to a base material having a primary layer of less fibrillated aramid fibers, synthetic graphite, and a filler, and a secondary layer of carbon particles on the surface of the primary layer. U.S. Patent No. 5,856,244 relates to a friction material comprising a base impregnated with a curable resin where the primary layer comprises less fibrillated aramid fibers, synthetic graphite and filler; and a secondary layer of carbon particles and a retention aid. The U.S. Patent No. 5,958,507 relates to a process for producing the friction material where at least one surface of the fibrous material which comprises less fibrillated aramid fibers is coated with carbon particles and a retention aid, impregnating with a phenolic or modified phenolic resin, and curing. The U.S. Patent No. 6,001,750 relates to a friction material comprising a fibrous base material impregnated with a curable resin where the fibrous base material has a porous primary layer of less fibrillated aramid fibers, carbon particles, carbon fibers, filler material, phenolic novoloid fibers, and optionally, cotton fibers, and a secondary layer of carbon particles which cover the surface at about 3 to about 90% of the surface.

In addition, various base materials are described in commonly owned BorgWarner Inc. U.S. Patent Nos. 5,753,356 and 5,707,905 which describe base materials comprising less fibrillated aramid fibers, synthetic graphite and filler. Another commonly owned patent, Patent No. 6,130,176, relates to non-metallic fibrous base materials comprising less fibrillated aramid fibers, carbon fibers, carbon particles and filler.

Yet another commonly owned patent US 6,630,416 B1 relates to a friction material having a porous primary layer and a secondary layer of silica particles covering about 3 to about 90% of the surface of the primary layer. In a preferred aspect, the friction modifying particles comprise at least one of silica particles, resin powders, carbon powder or particles and/or partially carbonized powder or particles and mixtures thereof.

In order for friction materials to be useful in "wet" applications, the friction material must have a wide variety of acceptable characteristics. The friction material must have good anti-shudder characteristics; must be resilient or elastic yet resistant to compression set, abrasion and stress; have high heat resistance and be able to dissipate heat quickly; and, have long lasting, stable and consistent frictional performance. If any of these characteristics are not met, optimum performance of the friction material is not achieved.

It is also important that a suitable impregnating resin be used with the fibrous base material in order to form a high-energy application friction material. The friction material must have good shear strength both when saturated with the wet resin during impregnation and when saturated with brake fluid or transmission oil during use.

It is also important, under certain applications, that the friction material have high porosity such that there is a high fluid permeation capacity during use. Thus, it is important that the friction material not only be porous, it must also be compressible. The fluids permeated into the friction material must be capable of being squeezed or released from the friction material quickly under the pressures applied during operation of the brake or transmission, yet the friction material must not collapse. It is also important that the friction material have high thermal conductivity to also help rapidly dissipate the heat generated during operation of the brake or transmission.

As far as is known, there is no disclosure of friction material for use in transmission systems which includes a fibrous base material comprising a high fiber content/low filler content primary layer.

Further, as far as is known, there is no disclosure of such friction material comprising a high fiber/low filler content primary layer having deposited thereon a secondary layer of friction modifying particles

Accordingly, it is an object of the present invention to provide an improved friction material with reliable and improved properties compared to those of the prior art.

A further object of this invention is to provide friction materials with improved"anti-shudder", "hot spot" resistance, high heat resistance, high friction stability and durability, porosity, strength, and elasticity.

As a result of extensive research in view of the need for a better friction material, a friction material with improved characteristics has been developed by the invention. The present wet friction material is useful in "wet" applications where the friction material is "wetted" or impregnated with a liquid such as brake fluid or automatic transmission fluid during use. During use of the "wet" friction material, the fluid is ultimately squeezed from or is impregnating the friction material. Wet friction materials differ greatly, both in their compositions and physical characteristics from "dry" friction materials.

### DISCLOSURE OF THE INVENTION

In order to achieve the requirements discussed above, many materials were evaluated for friction and heat resistant characteristics under conditions similar to those encountered during operation. Both commercially available brake linings and transmission materials were investigated and proved not to be suitable for use in high-energy applications. The present invention provides a friction material as recited in the appended claim 1.

The friction material of the present invention has improved anti-shudder characteristics, improved "hot spot" resistance, desirable friction characteristics for "smooth shifts", high heat resistance durability, elasticity, improved strength and porosity.

Various friction modifying particles are useful as the secondary layer on the woven material. In particular, silica particles such as diatomaceous earth, celite, celatom, and/or silicon dioxide are especially useful. The surface friction modifying particles are present at about 0.2 to about 30%, by weight, and preferably about 2-10%, by weight, and most preferably about 3-5%, by weight, of the coated woven material.

Another type of particularly suitable friction modifying material useful in the secondary layer is a porous carbon material. In certain embodiments, carbon particles are particularly useful. Also, in one particular embodiment, the secondary layer comprises a mixture of silicon particles and carbon particles deposited on the surface of the primary layer in a preferred ratio. In certain embodiments, the secondary layer comprises about 20% to about 35%, by weight, of silica particles, and about 65% to about 80% carbon particles, based on the total weight of the friction modifying particles. Woven fiber material can be impregnated using different resin systems. In certain non-inventive embodiments, it is useful to impregnate the woven fiber material with a phenolic resin or a modified phenolic-based resin. In certain non-inventive embodiments, when a silicone resin is blended or mixed with a phenolic resin in compatible solvents and that silicone-phenolic resin blend is used to impregnate the woven fiber material, an especially useful high performance, durable friction material is formed.

### BRIEF DESCRIPTION OF DRAWINGS

Figs. 1a and 1b the torque curves (µPVT) for Comparative example A at various levels and speed at 373K (100°C) (Fig. 1a) and at 323K (50 °C) (Fig. 1b).
Figs. 2a and 2b the torque curves (µPVT) for Comparative example B at various levels and speed at 373K (100°C) (Fig. 2a) and at 323K (50 °C) (Fig.2b).
Figs. 3a and 3b the torque curves (µPVT) for Example 1 (outside the invention as claimed) at various levels and speed at 373K (100°C) (Fig. 3a) and at 323K (50 °C) (Fig.3b).
Figs. 4a and 4b the torque curves (µPVT) for Example 2 (outside the invention as claimed) at various levels and speed at 373K (100°C) (Fig. 4a) and at 323K (50 °C) (Fig.4b).
Figs. 5a-5d are graphs comparing the initial (µi) (Fig. 5a), dynamic (µd) (Figs. 5b), and final (µ0) (Fig. 5c) coefficients of friction and the ratio of final/dynamic (µ0)/ (µd) (Fig. 5d) coefficient of friction to the apply facing pressure, kPA, for Comparative Ex. A.
Figs. 6a-6d are graphs comparing the initial (µi) (Fig. 6a), dynamic (µd) (Figs. 6b), and final (µ0) (Fig. 6c) coefficients of friction and the ratio of final/dynamic (µ0)/ (µd) (Fig. 6d) coefficient of friction to the apply facing pressure, kPA, for Comparative Ex. B.
Figs. 7a-7d are graphs comparing the initial (µi) (Fig. 7a), dynamic (µd) (Figs. 7b), and final (µ0) (Fig. 7c) coefficients of friction and the ratio of final/dynamic (µ0)/ (µd) (Fig. 7d) coefficient of friction to the apply facing pressure, kPA, for Example 1 (outside of the invention as claimed).
Figs. 8a-8d are graphs comparing the initial (µi) (Fig. 8a), dynamic (µd) (Figs. 8b), and final (µ0) (Fig. 8c) coefficients of friction and the ratio of final/dynamic (µ0)/ (µd) (Fig. 8d) coefficient of friction to the apply facing pressure, kPA, for Example 2 (outside of the invention as claimed).
Fig. 9a is a graph showing the test conditions for conducting a high speed step level "hot spot" test using automatic transmission fluid "B".
Fig. 9b is a graph the high speed step level "hot spot" test results for the Comparative example A, the Comparative example B, Example 1 (outside of the invention as claimed), and Example 2 (outside of the invention as claimed).
Fig. 10 is a graph showing the compression modulus for Example 1, Example 2, Comparative example B, and Comparative example C.
Fig. 11a is a graph showing the µ-V durability relationship (constant speed method) for Example 1 (outside of the invention as claimed) showing the cycles at 1, 5, 10, 15, 20, 25 and 30 by comparing the coefficient of friction (µ) to the slip speed (rpm).
Fig. 11b is a graph showing the slope vs. cycle for Example 1(outside of the invention as claimed).
Fig. 12a is a graph showing the µ-V durability relationship (constant speed method) for Example 2 (outside of the invention as claimed) showing the cycles at 1, 5, 10, 15, 20, 25 and 30 by comparing the coefficient of friction (µ) to the slip speed (rpm).
Fig. 12b is a graph showing the slope vs. cycle for the Example 2 (outside of the invention as claimed).
Fig. 13 is a schematic illustration of a process for making a high fiber content fibrous base material and a friction material therewith.
Fig. 14a is a scanning electron microphotograph showing a woven material with friction modifying materials deposited thereon and showing its smoothness.
Fig. 14b is a scanning electron microphotograph showing a prior art woven material.
Fig. 15a is a scanning electron microphotograph showing a woven material with 9 lb friction modifying materials deposited thereon.
Fig. 15b is a scanning electron microphotograph showing a woven material with 15 lb friction modifying materials deposited thereon.
Fig. 16 is a scanning electron microphotograph showing a woven material with friction modifying materials deposited thereon and showing the coating thickness of one example.
Fig. 17 is a graph showing the µ-V relationship showing the durability of the material of the present invention as compared to two comparative samples.

### BEST MODE OF CARRYING OUT THE INVENTION

The friction material of the present invention has improved compression modulus and improved "hot spot" resistance. Also, the friction material has improved elasticity and improved porosity which allow for more uniform heat dissipation during use of the friction material. The fluid in the transmission or brake can rapidly move through the porous structure of the friction material. Further, the increased elasticity provides more uniform pressure or even pressure distribution on the friction material such that uneven lining wear, and separator plate "hot spots" are eliminated.

The more porous the structure of the friction material, the more efficient is the heat dissipation. The oil flow in and out of the friction material during engagement of the friction material during use occurs more rapidly when the friction material is porous. The present invention relates to a non-asbestos, fibrous base material comprising a primary layer having i) a high fibers content and ii) a low friction filler material content, such as diatomaceous earth particles; and a secondary layer comprising friction modifying particles deposited on the primary layer. Also, in certain embodiments, it is useful to have less fibrillated aramid fibers in the high fiber-content fibrous base material to provide a desirable pore structure to the friction material which, in turn, provides increased thermal resistance to the friction material. The fiber geometry not only provides increased thermal resistance, but also provides delamination resistance and squeal or noise resistance. In certain embodiments, the presence of the carbon fibers in the primary layer aids in increasing the thermal resistance, maintaining a steady coefficient of friction and increasing the squeal resistance. The fibrous base material has from 10 to 20%, and in certain embodiments about 15%, by weight, aramid fibers, combined with a relatively high level, 80 to 90%, by wt, of cotton or other cellulose type fibers. Alternatively, the fibrous base material has from 50 to 60%, and in certain embodiments about 55%, by weight, aramid fibers, when combined with about carbon fibers40 to about 50%, by wt.

When carbon fibers are used in the fibrous base material to provide good heat conduction such that the friction material has a desired heat resistance. In particular embodiments, the fibrous base material has from about 5 to about 20%, and in certain embodiments, about 10 to about 15%, by weight, carbon fibers. The use of less fibrillated aramid fibers and carbon fibers in a fibrous base material improves the friction material's ability to withstand high temperatures. Less fibrillated aramid fibers generally have few fibrils attached to a core fiber. The use of the less fibrillated aramid fibers provides a friction material having a more porous structure; i.e., there are more and larger pores than if a typical fibrillated aramid fiber is used. The porous structure is generally defined by the pore size and liquid permeability. In a preferred embodiment, the fibrous base material defines pores ranging in mean average size from about 2.0 to about 25 microns in diameter. In certain embodiments, the mean pore size ranges from about 2.5 to about 8 microns in diameter and the friction material had readily available air voids of at least about 50% and, in certain embodiments, at least about 60% or higher.

When the friction material has a higher mean flow pore diameter and permeability, the friction material is more likely to run cooler or with less heat generated in a transmission due to better automatic transmission fluid flow throughout the porous structure of the friction material. During operation of a transmission system, oil deposits on the surface of the friction material tend to develop over time due to a breakdown of the automatic transmission fluid, especially at high temperatures. The oil deposits on the fibers decrease the pore openings. Therefore, when the friction material initially starts with larger pores, there are more open pores remaining during the useful life of the friction material. In addition, in embodiments at least partially impregnated with a silicone resin, the silicone resin, due its elastic characteristics, allows the fibers in the friction material to have an even more open structure.

Also, in certain embodiments, it is desired that the aramid fibers have a length ranging from about 0.5 to about 10 mm and a Canadian Standard Freeness (CSF) of greater than about 300. Thus, in certain embodiments, the aramid fibers can have a freeness of about 350 to about 650 on the Canadian Standard Freeness index. In certain other embodiments, it is desired to use less fibrillated aramid fibers which have a CSF of about 450 to about 550 preferably about 530 and greater; and, in other certain embodiments, about 580-650 and above and preferably about 650 and above. In contrast, more fibrillated fibers, such as aramid pulp, have a freeness of about 285-290.

The "Canadian Standard Freeness" (T227 om-85) means that the degree of fibrillation of fibers can be described as the measurement of freeness of the fibers. The CSF test is an empirical procedure which gives an arbitrary measure of the rate at which a suspension of three grams of fibers in one liter of water may be drained. Therefore, the less fibrillated aramid fibers have higher freeness or higher rate of drainage of fluid from the friction material than other aramid fibers or pulp. Friction materials comprising the aramid fibers having a CSF ranging from about 430-650 (and in certain embodiments preferably about 580-640, or preferably about 620-640), provide superior friction performance and have better material properties than friction materials containing conventionally more fibrillated aramid fibers. The longer fiber length, together with the high Canadian freeness, provide a friction material with high strength, high porosity and good wear resistance. The less fibrillated aramid fibers (CSF about 530-about 650) have especially good long-term durability and stable coefficients of friction.

Still other embodiments that are within the contemplated scope of the present invention, include synthetic graphite in the fibrous base material to provide a more three dimensional structure to the fibrous base material than other types of graphite material. The synthetic graphite is made by graphitization of a raw stock material such as petroleum coke and a coal tar pitch binder. The raw materials are mixed and heated to temperatures of about 3073K (2,800°C) to about 3273K (3,000°C). in special graphitizing furnaces which convert the baked carbon body into a polycrystalline graphite article. The synthetic graphite (which has high thermal conductivity) provides the friction material with the ability to dissipate heat more rapidly than other types of graphite. In certain embodiments, it is preferred that the size and geometry of the synthetic graphite be in the about 20 to about 50 micron size range. In these certain embodiments, it has been discovered that if the graphite particle size is too large or too small, there is not the optimum three-dimensional structure and consequently the heat resistance is not as optimum. In particular embodiments, about 20 to about 40%, by weight, graphite is included in the fibrous base formulation

Small amounts of at least one type of filler material are also useful in the primary layer of the fibrous base material of the present invention. For example, silica fillers, such as diatomaceous earth, are useful. However, it is contemplated that other types of fillers are suitable for use in the present invention and that the choice filler depends on the particular requirements of the friction material. In particular, relatively small amounts, preferably ranging from about 3 to about 15%, by weight, of filler material, is now found to provide an especially useful primary layer. When carbon fibers are present in the primary layer, it is preferred that there is no cotton fiber content. In other non-inventive embodiments with no carbon fiber content, a relatively high amount of cotton fibers, such as about 40-50%, by weight, in the primary layer of the fibrous base material improves the friction material's clutch "break-in" characteristics at an economical cost. In such embodiments, cotton fiber is added to the fibrous base material of the present invention to give the fibrous material higher coefficients of friction. In certain non-inventive embodiments, about 40 to about 50%, and, in certain embodiments, about 45% cotton can also be added to the fibrous base material.

At least one type of latex type material can be included in the fibrous base material. In particular embodiments, the fibrous base material can have from about 0 to about 3%, and in certain embodiments, about 2%, by weight, latex type material.

Described herein is a non-inventive formulation for a primary layer of a fibrous base material which comprises about 40 to about 60%, by weight, less fibrillated aramid fiber; about 5 to about 20%, by weight, carbon fibers; about 10 to about 20% cotton fibers; about 3 to about 15% carbon particles, about 3 to about 15%, by weight, filler material; and about 0 to about 3%, by weight, latex type material.

Also described herein is a non-inventive formulation for a primary layer of a high fiber content fibrous base material comprises about 50 to about 60%, by weight, aramid fibers; about 40 to about 10%, by weight, cotton fibers; about 5-15%, by weight, carbon fibers; about 20 to about 30%, by weight, graphite particles; and, about 5 to about 15%, by weight, filler material.

Also described herein is a non-inventive formulation for a primary layer of a high fiber content fibrous base material comprises about 50 to about 60%, by weight, aramid fibers, about to about 15%, by weight, carbon fibers; about 20 to about 30 %, by weight, graphite; and about 5 to about 15%, by weight, silica filler material.

A secondary layer of the friction modifying particles is deposited on the high fiber-content primary layer to form the fibrous base material. The use of a mixture of friction modifying particles as a secondary layer on the primary layer of the fibrous base material provides high heat resistant and highly durable fibrous base material.

It has surprisingly been found that a combination of silica particles and carbon particles, when present in preferred ratios, as a secondary layer of a fibrous base material, is particularly useful.

In certain embodiments, useful friction modifying particles include a desired mixture of silica particles and partially and/or fully carbonized carbon particles. For example, the friction modifying particles can comprise a mixture of i) diatomaceous earth particles and ii) fully carbonized carbon particles or partially carbonized particles, and mixtures thereof. In other certain embodiments, useful friction modifying particles include resin powders such as phenolic resins, silicone resins, epoxy resins and mixtures thereof.

In certain embodiments, the secondary layer mixture comprises silica particles and carbon particles in a ratio of about 4 parts silica particles to about 1part carbon particles. In other embodiments, the ratio is about 2 parts silica particles to about 1part carbon particles. For example, silica particles such as diatomaceous earth, Celite®, Celatom®, and/or silicon dioxide are especially useful. The silica particles are inexpensive organic materials which bond strongly to the fibrous materials. The silica particles provide high coefficients of friction to the friction material. The silica particles also provide the friction material with a smooth friction surface and provides a good "shift feel" and friction characteristics to the friction material such that any "shudder" is minimized. The carbon particles, while being relatively expensive, provide especially beneficial hot spot resistance and high friction stability and durability to the friction material.

The uniformity of the secondary layer of the friction modifying particles on the surface of fibrous base materials is achieved by using a range and size of the particles that is preferably from about 0.5 to about 80 microns, and preferably about .5 to about 20 microns. In these certain embodiments, it has been discovered that if the friction modifying particle size is too large or too small, the optimum three-dimensional structure not achieved and, consequently, the heat dissipation is not as optimum.

In preferred embodiments, the amount of friction modifying particles on the primary layer ranges from about 0.2 to about 40%, by weight, and in certain embodiments about 2 to about to about 25%, by weight, and in certain preferred embodiments about 2 to about 15%, by weight, of the friction paper. In preferred embodiments, the area of coverage of friction modifying particles on the primary layer surface is in the range of the about 3 to about 100% of the surface area.

A preferred process for producing the friction material comprises mixing the ingredients forming the primary layers of the fibrous base material. At least one surface of the primary layer of the fibrous base material is coated with the secondary layer of friction modifying particles. The fibrous base material with the friction modifying particles coated thereon is then impregnated with at least one phenolic or phenolic-based resin. The impregnated, coated fibrous base material is cured at a predetermined temperature for a predetermined period of time to form the friction material.

Various methods for impregnating the friction materials of the present invention can be used. The fibrous base material is impregnated with the phenolic or phenolic based resin, preferably so that the impregnating resin material comprises about 45 to about 65 parts, by weight, per 100 parts, by weight, of the friction material. After the fibrous base material has been impregnated with the resin, the impregnated fibrous base material is heated to a desired temperature for a predetermined length of time to form the friction material. The heating cures the phenolic resin at a temperature of about 422K (300°F). When other resins are present, such as a silicone resin, the heating cures the silicone resin at a temperature of about 477K (400°F). Thereafter, the impregnated and cured friction material is adhered to the desired substrate by suitable means.

Various resins useful in impregnating the fibrous base material include phenolic resins and phenolic-based resins. It is to be understood that various phenolic-based resins which include in the resin blend other modifying ingredients, such as epoxy, butadiene, silicone, tung oil, benzene, cashew nut oil and the like, are contemplated as being useful with the present invention. In the phenolic-modified resins, the phenolic resin is generally present at about 50% or greater by weight (excluding any solvents present) of the resin blend. However, it has been found that friction materials, in certain embodiments, can be improved when the impregnant resin blend contains about 5 to about 80%, by weight, and for certain purposes, about 15 to about 55%, and in certain embodiments about 15 to about 25%, by weight, of silicone resin based on the weight of the silicone-phenolic mixture (excluding solvents and other processing acids).

Examples of useful phenolic and phenolic-silicone resins useful in the present invention are disclosed in the above-referenced BorgWarner U.S. patents. Silicone resins useful in the present invention include, for example, thermal curing silicone sealants and silicone rubbers. Various silicone resins are useful with the present invention. One resin, in particular, comprises xylene and acetylacetone (2,4-pentanedione). The silicone resin has a boiling point of about 456K (362°F), vapor pressure at 293 K (68°F) mm, Hg: 21, vapor density (air=1) of 4.8, negligible solubility in water, specific gravity of about 1.09, percent volatile, by weight, 5% evaporation rate (ether=1), less than 0.1, flash point about 338K (149°F) using the Pensky-Martens method. It is to be understood that other silicone resins can be utilized with the present invention. Other useful resin blends include, for example, a suitable phenolic resin comprises (% by wt.): about 55 to about 60% phenolic resin; about 20 to about 25% ethyl alcohol; about 10 to about 14% phenol; about 3 to about 4% methyl alcohol; about 0.3 to about 0.8% formaldehyde; and, about 10 to about 20% water. Another suitable phenolic-based resin comprises (% by wt.): about 50 to about 55% phenol/formaldehyde resin; about 0.5% formaldehyde; about 11% phenol; about 30 to about 35% isopropanol; and, about 1 to about 5% water.

It has also been found that another useful resin is an epoxy modified phenolic resin which contains about 5 to about 25 percent, by weight, and preferably about 10 to about 15 percent, by weight, of an epoxy compound with the remainder (excluding solvents and other processing aids) phenolic resin. The epoxy-phenolic resin compound provides, in certain embodiments, higher heat resistance to the friction material than the phenolic resin alone.

In certain embodiments, it is preferred that the target pick up of resin by the fibrous base material range from about 40 to about 65%, and, in certain embodiments, about 60 to at least 65%, by weight, total silicone-phenolic resin. After the fibrous base material is impregnated with the resin, the fibrous base material is cured for a period of time (in certain embodiments for about 1/2 hour) at temperatures ranging between 573-673K (300-400°C) to cure the resin binder and form the friction material. The final thickness of the friction material depends on the initial thickness of the fibrous base material and, in certain embodiments, preferably ranges from about 0.356mm (0.014") to about 1.02mm (0.040").

It further contemplated that other ingredients and processing aids known to be useful in both preparing resin blends and in preparing impregnating fibrous-based materials can be included in the friction materials.

Both the silicone resin and the phenolic resin are present in solvents which are compatible to each other. These resins are mixed together (in preferred embodiments) to form a homogeneous blend and then used to impregnate a fibrous base material. There is not the same effect if a fibrous base material is impregnated with a phenolic resin and then a silicone resin is added thereafter or vice versa. There is also a difference between a mixture of a silicone-phenolic resin solution, and emulsions of silicone resin powder and/or phenolic resin powder. When silicone resins and phenolic resins are in solution they are not cured at all. In contrast, the powder particles of silicone resins and phenolic resins are partially cured. The partial cure of the silicone resins and the phenolic resins inhibits a good impregnation of the fibrous base material.

In certain embodiments of the present invention, the fibrous base material is impregnated with a blend of a silicone resin in a solvent which is compatible with the phenolic resin and its solvent. In one embodiment, isopropanol has been found to be an especially suitable solvent. It is to be understood, however, that various other suitable solvents, such as ethanol, methyl-ethyl ketone, butanol, isopropanol, toluene and the like, can be utilized in the practice of this invention. The presence of a silicone resin, when blended with a phenolic resin and used to impregnate a fibrous base material, causes the resulting friction materials to be more elastic than fibrous base materials impregnated only with a phenolic resin. When pressures are applied to the silicone-phenolic resin blended impregnated friction material of the present invention, there is a more even distribution of pressure which, in turn, reduces the likelihood of uneven lining wear. After the silicone resin and phenolic resin are mixed together, the mixture is used to impregnate a fibrous base material.

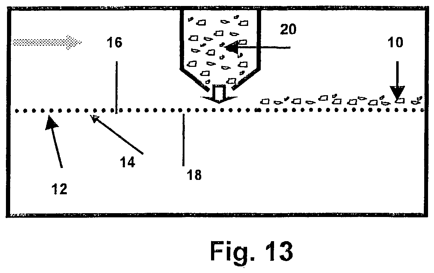

One preferred embodiment for making a friction material 10 of the present invention is shown in Fig. 13. A fibrous base material 12 comprises a lower layer 14 having an upper or top surface 16 and a lower or bottom surface 18. While the lower layer 14 is wet, friction modifying particles 20 are deposited onto the top surface 16 of the wet lower layer 14.

In certain methods it is also useful to use vacuum pressure (not shown) on the lower surface 18 of the wet layer 14 prior to deposition of the friction modifying particles 20 on the top surface 16 of the layer 14. It should be understood that other methods of depositing the friction modifying particles are also within the contemplated scope of the present invention.

It has been found that the secondary layer of friction modifying particles on the primary layer of the fibrous base material provides a friction material with good anti-shudder characteristics, high durability, good wear resistance and improved break-in characteristics.

### Examples

Slip Clutch Interface Technology Requirements: The friction materials of the present invention are designed for slipping clutch applications that meet special requirements. These requirements include high mechanical strength, heat resistance, durability, stability and shudder resistance. The friction material of the present invention has high porosity, a unique material structure for high mechanical strength, high temperature conductivity, and anti-shudder friction modifier characteristics. These material characteristics are the necessary conditions of smooth slip torque output and long term friction stability.

The slip clutch material requirements for desirable slip torque response and long-term durability include good curve shape and long term friction stability. The good curve shape is dependent on high material porosity and high friction modifier content. The long term friction stability is dependent on high porosity (anti-glazing) and high temperature ingredients.

The fibrous base material structure contains a porous and high temperature synthetic fiber network to provide high heat dissipation and friction stability. Friction modifying particles are deposited on the fibrous base material to provide the "anti-shudder" properties.

The following examples provide further evidence that the friction modifying particle coated fibrous base material and the resulting friction material of the present invention are an improvement over conventional friction materials. Various preferred embodiments of the invention are described in the following examples, which however, are not intended to limit the scope of the invention.

### Example I

Table 1 shows the formulations for a comparative examples A and Examples 1 and 2. Table I also shows the basis weight, caliper, porosity, dry and wet tensile and ash properties for the examples shown. Examples 1 and 2 comprise a primary including carbon fiber and a secondary layer comprises a mixture of carbon and celite and, latex as, a retention aid. In the secondary layer, the ratio of carbon particles to silica ranges about 1 to 2. Examples A, 1 and 2 are not in accordance with the invention as claimed.

**Table I**

| Furnish % Primary Layer | Example 1 | Example 2 | Compar. example A |
|---|---|---|---|
| Aramid fiber | 55 | 55 | 20-25 |
| | | | 22.5 |
| Carbon fiber 2mm | 10 | 10 | |
| Cotton | | | 25-35 |
| | | | 31 |
| Graphite | 25 | 25 | 15-25 |
| | | | 21 |
| Silica | 10 | 10 | 20-30 |
| | | | 25.5 |
| Latex | 2 | 2 | |
| WSR | X2 | X2 | |
| Secondary Layer | | | |
| Carbon | 2 | 3 | 2 |
| Celite | 4 | 6 | 8 |
| Latex % | 2 | 2 | |
| Basis Weight | 162.5 | 166.5 | |
| Caliper | 30 | 30.25 | |
| Porosity | 16.8 | 23.62 | |
| Dry Tensile | 6629 | 9114 | |
| Wet tensile | 4772 | 5353 | |
| Ash | 13.59 | 15.1 | |

### Example II

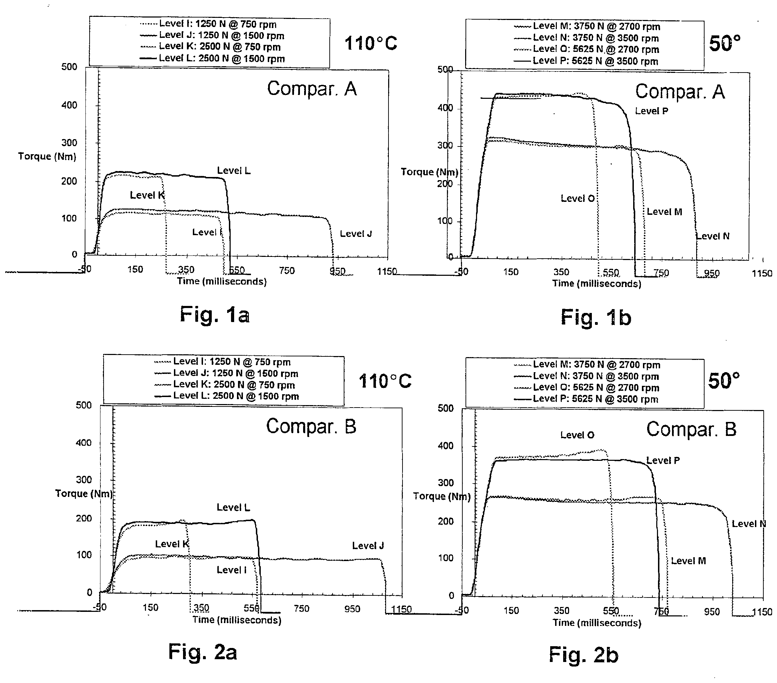

The µPVT torque curves provide further information about the materials. Figs. 1a and 1b the torque curves (µPVT) for Comparative exampleA at various levels and speed at 373K (100°C) (Fig. 1a) and at 323K (50°C) (Fig. 1b).

Figs. 2a and 2b the torque curves (µPVT) for Comparative example B at various levels and speed at 373K (100°C) (Fig. 2a) and at 323K (50°C) (Fig.2b).

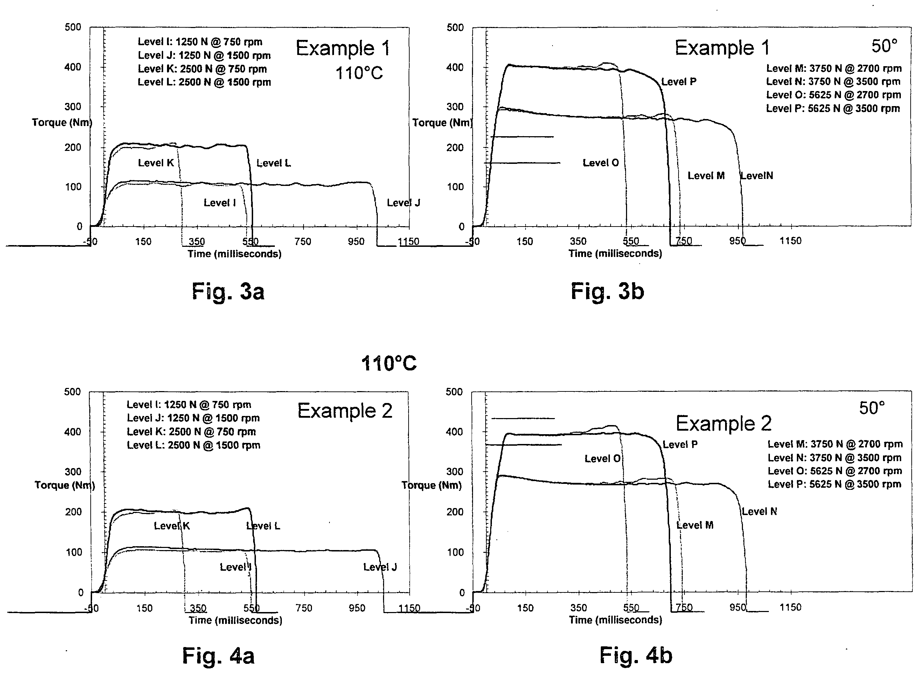

Figs. 3a and 3b the torque curves (µPVT) for Example 1 at various levels and speed at 373K (100°C) (Fig. 3a) and at 323K (50°C) (Fig.3b). Figs. 4a and 4b the torque curves (µPVT) for Example 2 at various levels and speed at 373K (100°C) (Fig. 4a) and at 323K (50°C) (Fig.4b).

### Example III

Example III shows the S12 µ-PVT test showing the initial coefficient of friction µi, dynamic coefficient (µd) and the final coefficient of friction (µο) and the ratio of µo/µd for the speeds shown.

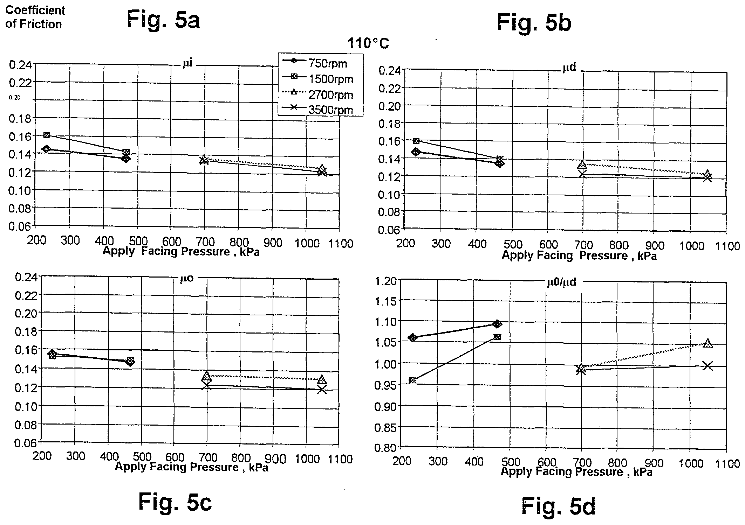

Figs. 5a-5d are graphs comparing the initial (µi) (Fig. 5a), dynamic (µd) (Figs. 5b), and final (µ0) (Fig. 5c) coefficients of friction and the ratio of final/dynamic (µ0)/ (µd) (Fig. 5d) coefficient of friction to the apply facing pressure, kPA, for Comparative Ex. A.

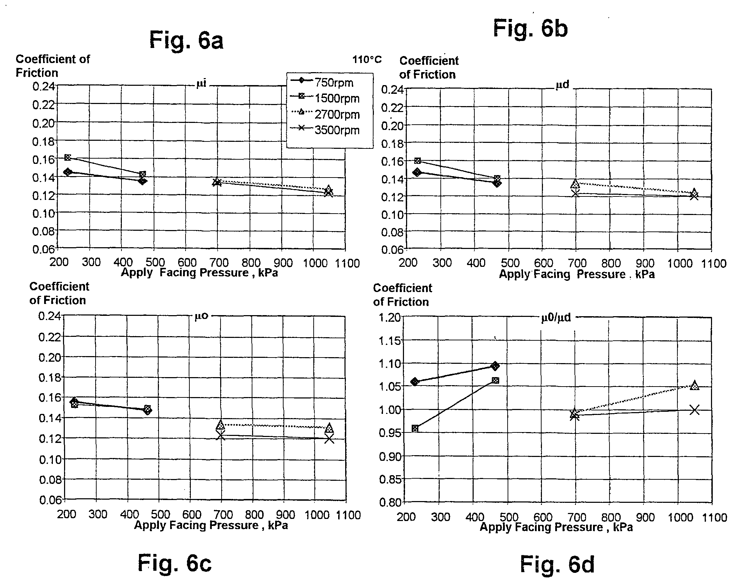

Figs. 6a-6d are graphs comparing the initial (µi) (Fig. 6a), dynamic (µd) (Figs. 6b), and final (µ0) (Fig. 6c) coefficients of friction and the ratio of final/dynamic (µ0)/ (µd) (Fig. 6d) coefficient of friction to the apply facing pressure, kPA, for Comparative Ex. B.

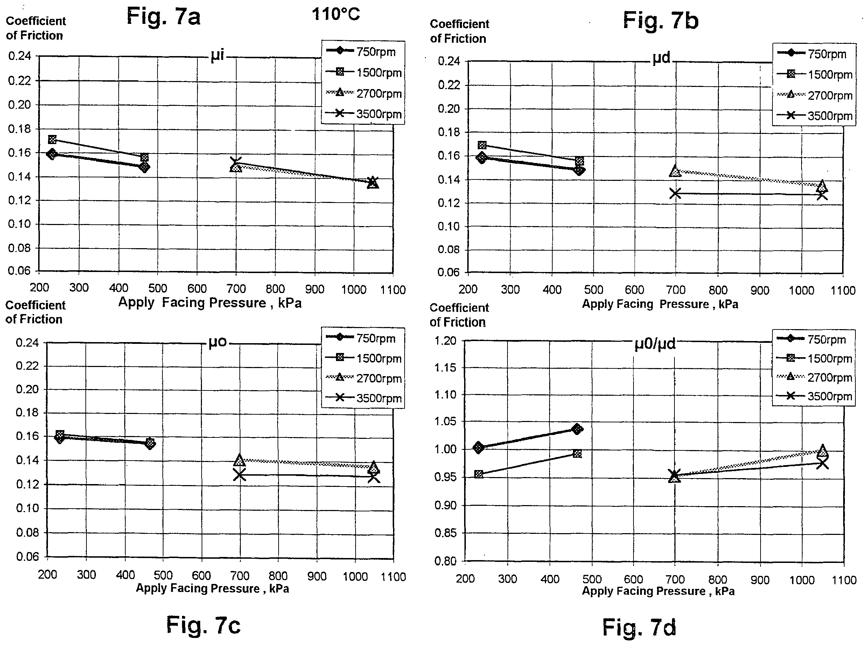

Figs. 7a-7d are graphs comparing the initial (µi) (Fig. 7a), dynamic (µd) (Figs. 7b), and final (µ0) (Fig. 7c) coefficients of friction and the ratio of final/dynamic (µ0)/ (µd) (Fig. 7d) coefficient of friction to the apply facing pressure, kPA, for Example 1.

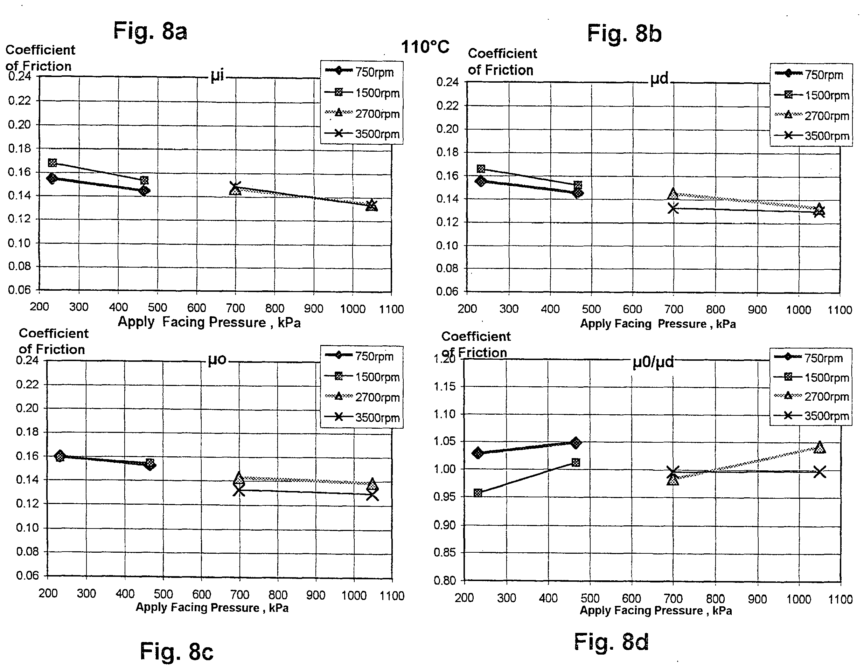

Figs. 8a-8d are graphs comparing the initial (µi) (Fig. 8a), dynamic (µd) (Figs. 8b), and final (µ0) (Fig. 8c) coefficients of friction and the ratio of final/dynamic (µ0)/ (µd) (Fig. 8d) coefficient of friction to the apply facing pressure, kPA, for Example 2.

### Example IV

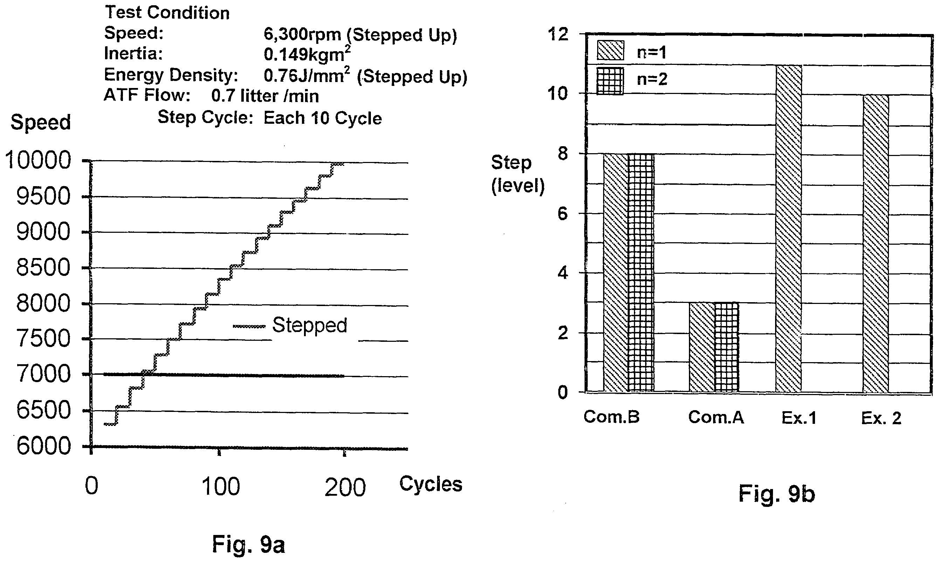

Example IV shows a high speed step level test. Fig. 9a is a graph showing the test conditions for conducting a high speed step level "hot spot" test using automatic transmission fluid "B".

Fig. 9b is a graph the high speed step level "hot spot" test results for the Comparative example A, the Comparative example B, the Example 1, and the Example 2.

### Example V

Example V shows the physical properties for comparative examples B and comparative example C and for examples 1 and 2.

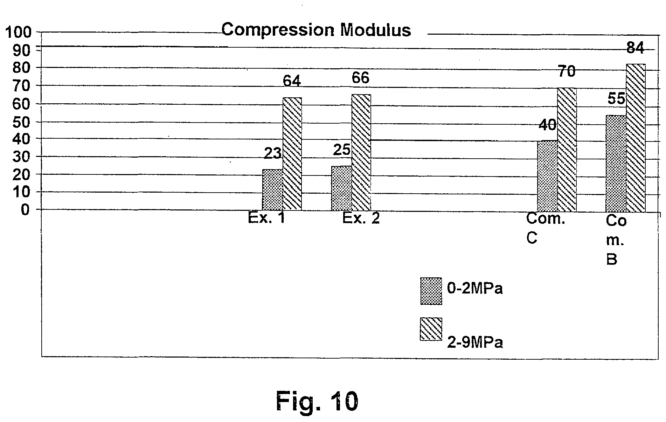

Fig. 10 shows the compression modulus for 0 to 2 MPA and for 2-9 MPA for these materials. It should be noted that the lower the modulus, the higher the elasticity of the material. The material has a very desirable elasticity.

### Example VI

Example VI shows the µ-v durability test using automatic transmission fluid "B".

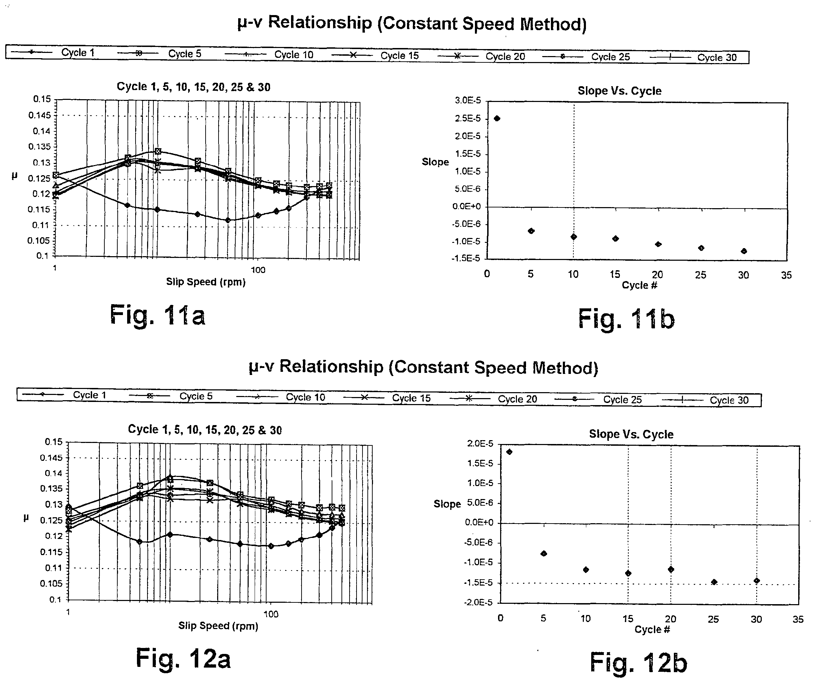

Fig. 11a is a graph showing the µ-V durability relationship (constant speed method) for Example 1 showing the cycles at 1, 5, 10, 15, 20, 25 and 30 by comparing the coefficient of friction (µ) to the slip speed (rpm).

Fig. 11b is a graph showing the slope vs. cycle for the Example 1.

Fig. 12a is a graph showing the µ-V durability relationship (constant speed method) for Example 2 showing the cycles at 1, 5, 10, 15, 20, 25 and 30 by comparing the coefficient of friction (µ) to the slip speed (rpm).
Fig. 12b is a graph showing the slope vs. cycle for the Example 2.

### Example VII

Another aspect relates to a non-asbestos, fibrous base material comprising a primary layer of a woven carbon material and a secondary layer comprising friction modifying particles deposited on the primary woven carbon layer.

In one particular embodiment, the primary layer comprises woven carbon fibers which provide increased thermal resistance to the friction material. The carbon fibers not only provide increased thermal resistance, but also provide delamination resistance and squeal or noise resistance.

In certain embodiments, the primary layer has an average permeability that is about twice that of Textron carbon fibers; that is primary layers of the present invention have an average permeability of about 9.353E-12 kr (m²) as compared to Textron carbon materials that have an average permeability of about 4.82513-12.

A secondary layer of the friction modifying particles is deposited on the primary layer to form the friction material. The use of friction modifying particles on the primary layer of the woven material provides an improved three dimensional structure to the woven material.

The uniformity of the secondary layer of the friction modifying particles on the surface of woven material is achieved by using a range and size of the particles that is preferably from about 0.5 to about 80 microns, and preferably about 0.5 to about 20 microns. In these certain embodiments, it has been discovered that if the friction modifying particle size is too large or too small, the optimum three-dimensional structure not achieved and, consequently, the heat dissipation is not as optimum.

In these certain embodiments, it has been discovered that if the friction modifying particle size is too large or too small, the optimum three-dimensional structure not achieved and, consequently, the heat dissipation is not as optimum.

In preferred embodiments, the area of coverage of friction modifying particles on the primary layer surface is in the range of about 3 to about 100% of the surface area.

In certain embodiments, the use of a mixture of friction modifying particles as a secondary layer on the primary layer of the woven material provides high heat resistant and highly durable friction material.

It has surprisingly been found that a combination of silica particles and carbon particles, when present in preferred ratios as a secondary layer on the woven material, is particularly useful.

In certain embodiments, the friction modifying particles comprises about 5% to about 15%, by weight, of friction modifying particles, based on the weight of the woven material.

In certain embodiments, the friction modifying particles comprise about 20% to about 35%, by weight, of silica particles, and about 65% to about 80% carbon particles, based on the total weight of the friction modifying particles.

Another aspect relates to a process for producing the friction material which first comprises forming the primary woven layer material. The woven material preferably has a warp of about 40-50, and preferably about 44-46 yarns/25.4mm (inch), and a fill of about 35-45, and preferably about 38-40 yarns/25.4mm (inch). In certain embodiments, the woven material is woven or formed such that the warp and fill are relatively smooth or planar, with respect to each other. That is, the woven material, taking into consideration both the thickness of the strands and the weaving pattern itself, provides a relatively smooth friction material. In certain embodiments, the woven material has a surface smoothness of about .0001 to about .001 Ra. The warp and fill define a plurality of indentations, or micropockets, which allow the friction modifying particles to be held on the surface of the woven material.

At least one surface of the primary woven layer is coated with the secondary layer of friction modifying particles. The woven material, with the friction modifying particles coated thereon, is then impregnated with at least one type of suitable resin. The impregnated, coated woven is cured at a predetermined temperature for a predetermined period of time to form the friction material.

The Table II below shows examples of resin pick up for full or complete coverage and for partial coverage of the woven material.

**Table II**

| Coverage | Full | Partial |
|---|---|---|
| Resin Pick UP PU%) | 106-120 | 85-94 |
| Deposit amount (0.454kg(lb)/279m² (3000ft²)) | 92 | 80 |
| Deposit amount G/m²) | 149 | 130 |

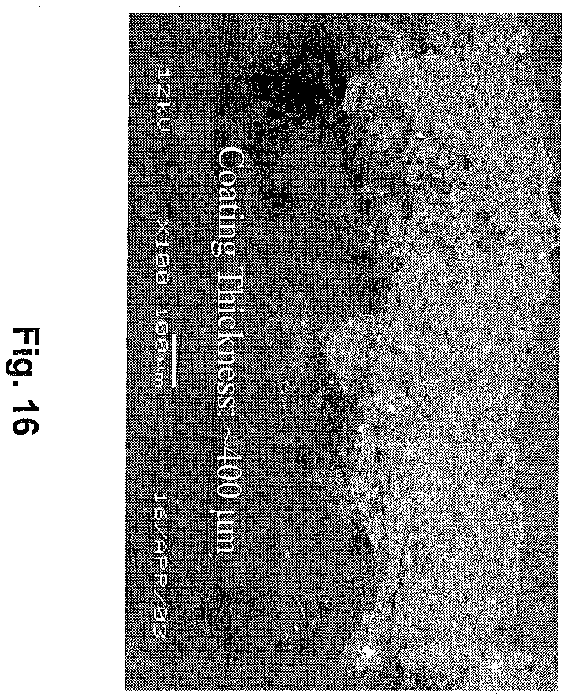

There is good particle adhesive due to the embedded fiber yarns in the deposit layer of friction modifying material. In the embodiments with full coverage of the carbon woven material, the surface of the friction material becomes very smooth which affects the coefficient of friction-slip speed performance. Fig. 16 shows a scanning electron microphotograph of a woven material with full, or complete, coverage of the surface of the woven material. of silicone resins and phenolic resins are partially cured. The partial cure of the silicone resins and the phenolic resins inhibits a good impregnation of the coated woven material. Certain aspects relate to a process for producing a friction material comprising: forming a woven material, coating about 3% to about 100% of at least one surface of the woven material with friction modifying particles, the friction modifying particles being present at about 0.2 to about 40%, by weight, based on the weight of the woven material, and impregnating the coated woven material with a resin, and thereafter curing the impregnated woven material at a predetermined temperature for a predetermined period of time.

### Example VII-A

The following examples provide further evidence that the friction modifying particles coated woven material and the resulting friction material are an improvement over conventional friction materials and have satisfactory characteristics with respect to certain paper type fibrous base friction materials.

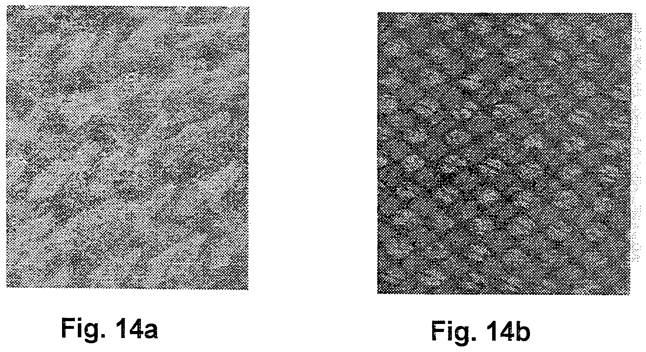

Fig. 14a is a SEM showing the structure of the primary woven layer and the saturation of the woven primary layer with the resin material and the deposit of carbon on the surface. In contrast, Fig. 14b is a commercially available fabric material.

### Example VII-B

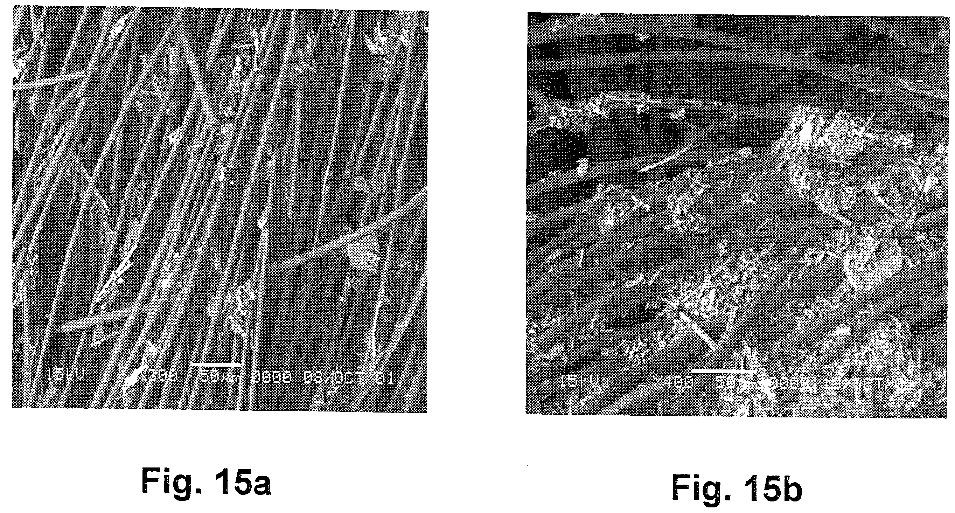

Fig. 15a shows the scanning electron microphotograph (SEM) for Example VII-1, a carbon fabric woven material saturated with about 9 lb/3000m² celite as the friction modifying material. Fig. 15b shows the scanning electron microphotograph for Example VII-1, a carbon fabric woven material saturated with about 6.8kg (15 lb)/3000m² celite as the friction modifying material. These SEMs show how the some of the friction modifying material penetrates into the warp and weft of the woven material while other of the friction modifying material remains on the surface of the woven material, thus giving the friction material its very desirable anti-shudder characteristics. Also these SEMs also show the high porosity of the friction material.

### Example VII-C

Fig. 16 is an SEM showing an Example VII-2 comprising a carbon woven material and having a full, or complete covering of the surface of the woven material with the friction modifying material. The friction modifying materials are embedded in the fiber yarns, thus allowing for good adhesion of the friction modifying particles to the woven material.

### Example VII-D

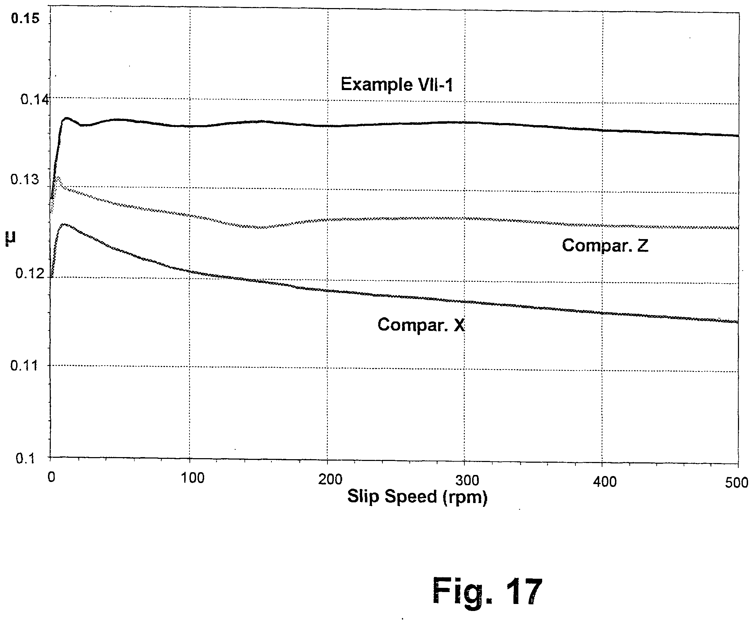

Fig. 17 is a graph comparing the durability of various materials: Example VII-1 is a carbon woven material coated with a celite material. Comparative VII-Z and comparative VII-X are samples of carbon fabrics without any coating of friction modifying material. The graph shows a comparison of coefficient of friction v. slipping time.

The torque curve shape indicates that the friction material of the present invention is especially useful in speed, high energy and high temperature application. The stable torque curve also shows that the friction material is noise free.

### INDUSTRIAL APPLICABILITY

The present invention is useful as a high energy friction material for use with clutch plates, transmission bands, brake shoes, synchronizer rings, friction disks or system plates.

The above descriptions of the preferred and alternative embodiments of the present invention are intended to be illustrative and are not intended to be limiting upon the scope as defined in the following claims.

## Claims

1. A friction material comprising a fibrous base material impregnated with at least one curable resin, the fibrous base material comprising a high fiber content porous primary layer and a secondary layer comprising friction modifying particles on at least one surface of the primary layer, wherein the high fiber content porous primary layer comprises at least 90% wt. % fibers and is composed from either (1) 10 to 20 wt. % aramid fibers and 80 to 90 wt. % cotton fibers or (2) 50 to 60 wt. % aramid fibers and 40 to 50 wt. % carbon fibers.

2. The friction material of claims 1, wherein the friction modifying particles comprise silica particles.

3. The friction material of any one of claims 1 or 2, wherein the friction modifying particles comprise diatomaceous earth.

4. The friction material of claim 1, wherein the friction modifying particles comprise about 20% to about 35%, by weight, of silica particles, and about 65% to about 80% by weight carbon particles, based upon the total weight of the friction modifying particles.

5. The friction material of claim 1, wherein the friction modifying particles comprise a mixture of diatomaceous earth particles and fully carbonized carbon particles or partially carbonized particles.

6. The friction material of any one of claims 1 to 5, wherein the friction modifying particle size ranges from about 0.5 to about 20 microns.

7. The friction material of any one of claims 1 to 6, impregnated with a phenolic resin or a modified phenolic resin.

8. The friction material of claim 7, wherein the friction material comprises about 45 to about 60% resin, by weight.

9. The friction material of any one of claims 1 to 6, impregnated with a mixture of a phenolic resin and a silicone resin wherein the amount of silicone resin in the mixture ranges from approximately 5 to approximately 80%, by weight, based on the weight of the mixture, and optionally, wherein the phenolic resin is present in a solvent material and the silicone resin is present in a solvent material which is compatible with the solvent material of the phenolic resin.

10. The friction material of claim 7 or 8, wherein the modified phenolic resin comprises an epoxy phenolic resin.

## Patentansprüche

1. Reibungsmaterial, umfassend ein faseriges Basismaterial, das mit mindestens einem härtbaren Harz imprägniert ist, wobei das faserige Basismaterial eine poröse Primärschicht mit hohem Fasergehalt und eine Sekundärschicht umfasst, die reibungsmodifizierende Partikel auf mindestens einer Oberfläche der Primärschicht umfasst, wobei die poröse Primärschicht mit hohem Fasergehalt mindestens 90 Gew.% Fasern umfasst und aus entweder (1) 10 bis 20 Gew.% Aramidfasern und 80 bis 90 Gew.% Baumwollfasern oder (2) 50 bis 60 Gew.% Aramidfasern und 40 bis 50 Gew.% Kohlefasern zusammengesetzt ist.

2. Reibungsmaterial nach Anspruch 1, wobei die reibungsmodifizierenden Partikel Siliciumdioxidpartikel umfassen.

3. Reibungsmaterial nach einem der Ansprüche 1 oder 2, wobei die reibungsmodifizierenden Partikel Kieselerde umfassen.

4. Reibungsmaterial nach Anspruch 1, wobei die reibungsmodifizierenden Partikel etwa 20 Gew.% bis etwa 35 Gew.% Siliciumdioxidpartikel und etwa 65 Gew.% bis etwa 80 Gew.% Kohlenstoffpartikel umfassen, bezogen auf das Gesamtgewicht der reibungsmodifizierenden Partikel.

5. Reibungsmaterial nach Anspruch 1, wobei die reibungsmodifizierenden Partikel eine Mischung aus Kieselerdepartikeln und vollständig verkohlten Kohlenstoffpartikeln oder teilweise verkohlten Partikeln umfassen.

6. Reibungsmaterial nach einem der Ansprüche 1 bis 5, wobei die Partikelgröße der reibungsmodifizierenden Partikel im Bereich von etwa 0,5 bis etwa 20 Mikrometer liegt.

7. Reibungsmaterial nach einem der Ansprüche 1 bis 6, imprägniert mit einem phenolischen Harz oder einem modifizierten phenolischen Harz.

8. Reibungsmaterial nach Anspruch 7, wobei das Reibungsmaterial etwa 45 bis etwa 60 Gew.% Harz umfasst.

9. Reibungsmaterial nach einem der Ansprüche 1 bis 6, imprägniert mit einer Mischung aus einem phenolischen Harz und einem Silikonharz, wobei die Menge an Silikonharz in der Mischung im Bereich von ungefähr 5 bis ungefähr 80 Gew.% liegt, bezogen auf das Gewicht der Mischung, und wobei das phenolische Harz gegebenenfalls in einem Lösungsmittelmaterial vorhanden ist und das Silikonharz in einem Lösungsmittelmaterial vorhanden ist, das mit dem Lösungsmittelmaterial des phenolischen Harzes kompatibel ist.

10. Reibungsmaterial nach Anspruch 7 oder 8, wobei das modifizierte phenolische Harz ein phenolisches Epoxyharz umfasst.

## Revendications

1. Matériau de frottement comprenant un matériau de base fibreux imprégné d'au moins une résine durcissable, le matériau de base fibreux comprenant une couche primaire poreuse à haute teneur en fibres et une couche secondaire comprenant des particules de modification de coefficient de frottement sur au moins une surface de la couche primaire, dans lequel la couche primaire poreuse à haute teneur en fibres comprend au moins 90 % en poids de fibres et est composée à partir de soit (1) 10 à 20 % en poids de fibres d'aramide et 80 à 90 % en poids de fibres de coton soit (2) 50 à 60 % en poids de fibres d'aramide et 40 à 50 % en poids de fibres de carbone.

2. Matériau de frottement selon la revendication 1, dans lequel les particules de modification de coefficient de frottement comprennent des particules de silice.

3. Matériau de frottement selon l'une quelconque des revendications 1 ou 2, dans lequel les particules de modification de coefficient de frottement comprennent de la terre de diatomées.

4. Matériau de frottement selon la revendication 1, dans lequel les particules de modification de coefficient de frottement comprennent environ 20 % à environ 35 %, en poids, de particules de silice et environ 65 % à environ 80 % en poids de particules de carbone, par rapport au poids total des particules de modification de coefficient de frottement.

5. Matériau de frottement selon la revendication 1, dans lequel les particules de modification de coefficient de frottement comprennent un mélange de particules de terre de diatomées et de particules de carbone totalement carbonisées ou de particules partiellement carbonisées.

6. Matériau de frottement selon l'une quelconque des revendications 1 à 5, dans lequel la taille des particules de modification de coefficient de frottement va d'environ 0,5 à environ 20 micromètres.

7. Matériau de frottement selon l'une quelconque des revendications 1 à 6, imprégné d'une résine phénolique ou d'une résine phénolique modifiée.

8. Matériau de frottement selon la revendication 7, le matériau de frottement comprenant environ 45 à environ 60 % de résine, en poids.

9. Matériau de frottement selon l'une quelconque des revendications 1 à 6, imprégné d'un mélange d'une résine phénolique et d'une résine de silicone dans lequel la quantité de résine de silicone dans le mélange va d'à peu près 5 à à peu près 80 %, en poids, par rapport au poids du mélange et éventuellement, dans lequel la résine phénolique est présente dans un solvant et la résine de silicone est présente dans un solvant qui est compatible avec le solvant de la résine phénolique.

10. Matériau de frottement selon la revendication 7 ou 8, dans lequel la résine phénolique modifiée comprend une résine époxy phénolique.
